# EUROPEAN PATENT SPECIFICATION

(11) **EP 1 841 588 B1**
(45) Date of publication and mention of the grant of the patent: **15.10.2014**
(21) Application number: 05819024.0
(22) Date of filing: 12.12.2005
(51) Int. Cl.: B29C 71/02

(54) **APPARATUS FOR THE STABILIZING HEAT TREATMENT OF PLASTIC STRIPS, FOR EXAMPLE OF POLYPROPYLENE AND/OR OF POLYETHYLENE, FOR THE PRODUCTION OF STRAPS OR OF OTHER TYPES OF STRIPS**
VORRICHTUNG ZUR STABILISIERENDEN WÄRMEBEHANDLUNG VON KUNSTSTOFFSTREIFEN, ZUM BEISPIEL AUS POLYPROPYLEN UND/ODER POLYETHYLEN, ZUR HERSTELLUNG VON BÄNDERN ODER ANDEREN STREIFENARTEN
APPAREIL A STABILISER LE TRAITEMENT THERMIQUE DE BANDES DE PLASTIQUE, NOTAMMENT DE POLYPROPYLENE ET/OU DE POLYETHYLENE, POUR LA PRODUCTION DE BRIDES OU D'AUTRES TYPES DE BANDES

(30) Priority: 23.12.2004 IT BO20040792
(43) Date of publication of application: 10.10.2007
(73) Proprietor: S.I.M.A.Società Industrie Meccaniche Affini a r.l, 40056-Crespellano (IT)
(72) Inventor: BOCCAFOGLI, Sergio, I-40128 BOLOGNA (IT)
(86) International application number: PCT/EP2005/056706
(87) International publication number: WO 2006/067068

(56) References cited:
- US-A- 2 317 409
- US-A- 2 451 597
- US-A- 4 830 806
- US-B1- 6 210 769

## Description

Apparatuses for the production of straps, raffia or other types of tapes or strips, usually of polypropylene and/or of polyethylene, hereinafter called "strips" for simplicity, are at present characterized by a considerable length, with stabilization apparatus sometimes as Jong as fifteen metres, and therefore are very unwieldy, very expensive and difficult to operate, especially when wanting to change from one type of product to another, for example from raffia to straps or to other types of strips.

An example of such an apparatus is described in US-A-2 451 597 (WHEELER). Indeed, US-A-2 451 597 (WHEELER) discloses an apparatus, in particular for the stabilization treatment of strips of plastics, for example of polypropylene and/or polyethylene, for the production of straps or of other types of strips, of the type comprising in series: first means for pulling the strips to be treated; optionally a unit for embossing the strips; a heat treatment oven to provide the process for stabilization of the strips; a tank with cooling liquid through which the strips pass after leaving the stabilization oven; means for drying the strips after they leave the tank; and second means for longitudinal pulling of the dried strips. Thus, document US-A-2 451 597 (WHEELER) illustrates the features contained in the preamble portion of present Claim 1.

Similar characteristics are present in the apparatus described in US-A-2 317 409 (SEATON).

The invention aims to overcome these limitations of the prior art, with an apparatus as in the appended claim, having great versatility of application, and being very easy to operate, and with very compact dimensions with respect to length relative to the apparatus of the known type and therefore of lower cost, the characteristics and advantages of which will become clear from the following description of a preferred embodiment, provided purely as a non-limiting example, in the single attached sheet of drawings, where the single diagram shows a schematic side view of stabilization apparatus according to the invention.

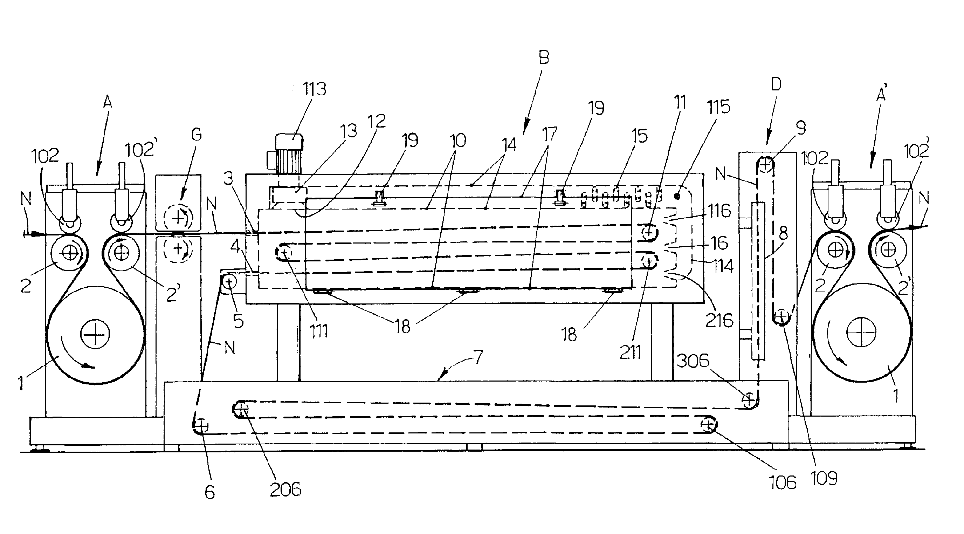

In the attached single Figure, N indicates one of the strips of plastic material placed side by side, after stretching using any apparatus of a known type, whereas A and A' indicate the means with motorized pulling rollers on which the said strips are returned so that they can be fed witch the correct tension through an interposed oven B where said stripe are heated to the temperature required for the stabilisation process which comprises removing, from said strips, the gradient of elastic memory that they acquired in the preceding stretching stage, whereas the strips themselves are maintained longitudinally at the correct tension, yet are free to retract and are made to advance by the pulling groups, A and A', with the downstream group A' running at a suitably lower speed than the upstream group A. The pulling groups A and A' can be of any Known type or preferably are of the type shown in the drawings and protected by a separate patent application in the name of the same applicant, characterized by a compact design and an ample linear surface of contact with the strips N. In these groups, the intermediate roller that is positioned at the vertex of the hypothetical triangle, for example the bottom roller 1, has a diameter greater than the sum of the diameters of the other two upper rollers 2, 2' which are advantageously of identical diameter, so that the overall dimensions of the entire pulling group correspond substantially to the diameter of the larger roller 1. Good results were obtained for example using a middle roller 1 approx. 650 mm in diameter and end rollers 2, 2' approx. 240 mm in diameter. The overall dimension of each pulling group A, A', is thus only 650 mm and the surface of linear contact with the strips of said groups A, A', bearing in mind that the useful surface of contact of the middle roller 1 is about ¾ of the total circumference of said roller, is approx. 2300 mm, as against 1500 mm in the prior art. Rollers 1, 2, 2' of groups A and A' are driven by electric motors with torque control, the side surface of said rollers can be chromium-plated or coated with ceramic, and some of the rollers, especially those of larger diameter 1, can be temperature-controlled by means of forced circulation of a heating fluid, for example for the downstream group A, and of a cooling fluid for the upstream group A', by conventional means. Rollers 2, 2' are assisted by moving pressure rollers 102, 102' with a working surface of Vulcolan or some other suitable material, driven by respective servomechanisms, to keep strips N properly directed onto the pulling rollers in question.
Between the first pulling group A and the stabilization oven B, when the apparatus is set up for the production of straps, a continuous embossing unit G is provided, which will not be considered here as It is of a known type. Between the stabilization oven B and the downstream pulling group A', a drying device D is provided, typically extending vertically, to be discussed in more detail later, which provides drying of the strips before they reach pulling group A' and are fed from the latter to the downstream winding machines, not shown. The strips N leaving the embossing device G enter oven B through an entrance door 3 positioned at one end of said oven and, after the stabilization treatment, exit from this same end of the oven, through an exit door 4 positioned under door 3. After running back onto a roller 5 positioned by the exit door 4, idling or motorized with torque-control means, the strips follow a descending path and are taken up in zigzag fashion on four rollers 6, 106, 206, 306 positioned by the ends of a horizontal chamber 7 positioned under oven B and along it, and in which a cooling fluid circulates, for example water, conditioned by suitable means for cooling and temperature control, not shown. On leaving the last roller 306 of cooling tank 7, strips N enter the drying device D where they are dried at least in the first ascending path by drying means 8 of a known type, so that the water residues flow down by gravity into tank 7 underneath. On leaving the drying means 8, the strips are sent on a descending path by means of rollers 9, 109 and go from the last of these rollers to the first roller of the downstream pulling group A'.
The overall length of the apparatus as shown in the drawings is about 5800-6000 mm and its height is about 2000 mm. The stabilization oven B has a length of about 3000 mm, so in the cooling tank underneath, the strips N passing over the four rollers 6, 106, 206 and 306, cover a total path of about 9 metres, which is more than sufficient for cooling them. It is clear that, owing to the positioning of cooling tank 7 underneath the stabilization oven B, the overall length of the apparatus can be kept compact as just mentioned.
The entrance door 3 and exit door for strips N into and out of oven B are provided with suitable seals of a known type, not shown, for example based on Teflon and/or other suitable materials, so as to limit communication of the internal treatment chamber 10 of said oven with the exterior, with said oven being suitably insulated to prevent heat loss. At least three rollers are arranged transversely at the end of treatment chamber 10; one of these rollers 111 is positioned at the end with doors 3 and 4, in a space between said doors, whereas the other two rollers 11, 211 are positioned at the end of chamber 10, so that in this chamber the strips have to cover a total path of about 10-11 metres. Rollers 11, 111, 211 are suitably motorized so as to provide feed of the strips and to allow them the necessary freedom of retraction following the heat treatment that they undergo, said retraction being on average of the order of 10% of their original length.
An opening 12 is provided in the initial, top part of treatment chamber 10 and is abutted to the suction point of a fan 13 for example of the centrifugal type, with suitable characteristics, driven by an electric motor 113 located outside of the insulated structure of the oven. The delivery of fan 13 is abutted to a duct or channel 14 provided in the top of the oven, suitably insulated from the exterior, which runs along the entire length of the oven and, in the end portion, through a heating source 15 under electronic control, for example formed from batteries of shielded electric heating resistances, of identical characteristics, for example U-shaped, with external fins and positioned transversely and with correct inclination in said channel 14. At least one heat sensor 115 is provided downstream from the heating source 15 and is connected to known means for regulating and controlling the operation of said source 15, so as to maintain the temperature value in treatment chamber 10 necessary for the process for stabilization of the strips N. Where it leaves the heating source 15, channel 14 continues with a descending portion 114, suitably insulated from the exterior, which opens on the inner, rear wall of chamber 10 with three mouths, of which the middle one 16 discharges into the space between rollers 11, 211, whereas the other two mouths 116, 216 discharge above the top roller 11 and below the bottom roller 211 respectively, so as to distribute the hot air uniformly in chamber 10, so that the four paths that the strips follow as they travel between rollers 11, 111 and 211 are affected uniformly. On the wall opposite the blowing nozzles 16, 116 and 216, the hot air is collected by fan 13 and is circulated through the heating unit 15. Of course, for greater uniformity of the treatment temperature it is possible to provide, corresponding to the wall of the oven that is provided with the doors 3 and 4, an opening opposite opening 12, also on the lower portion of the treatment chamber 10, connected to a corresponding fan identical to fan 13, and which then channels the air into the upper duct 14 or into its own lower duct, with a corresponding heat source identical to source 15 and which discharges at the lower end of duct 114, the whole in a manner that will be understood and can be carried out easily by a person skilled in the art.
Oven B will be provided on one side with a hinged flap 17, for example with bottom hinges 18, and provided on the other side or distributed on the entire periphery, with suitable sealed closing means 19, so that on opening said flap it would be possible to have access to all the internal components of the oven, for all the operations of starting, stopping and maintenance.

## Claims

1. Apparatus, in particular for the stabilization treatment of strips of plastics, for example of polypropylene and/or polyethylene, for the production of straps or of other types of strips, of the type comprising in series: first means (A) for pulling the strips to be treated; a unit (G) for embossing the strips; a heat treatment oven (B) to provide the process for stabilization of the strips; a tank with cooling liquid through which the strips pass after leaving the stabilization oven; means (D) for drying the strips after they leave said tank; and second means (A') for longitudinal pulling of the dried strips; which travel at a speed that is suitably lower than that of the upstream pulling means (A);
**characterized in that** the stabilization oven (B) is provided at one and the same end with an upper door (3) for the strips to enter and a lower door (4) for said strips to leave, and at this same end, said oven is provided with means (5) for subsequent downward feed of the strips so that they can enter at an end opening upwards, in the cooling tank (7) which is positioned underneath the oven, and along it, and that an opening is provided at the other end for the cooled strips to leave, whereupon they rise and enter the drying means (D), and then reach the downstream pulling means (A'), the whole being arranged to limit the overall length of the apparatus in question.

2. Apparatus according to claim 1, **characterized in, that** it has a total length of about 5800-6000 mm, consistent with the use of a stabilization oven (B) with length of about 3000 mm and pulling groups (A, A') with limited overall dimensions and with a large linear surface of contact with the strips, for example each about 650 mm long, at a distance from the opposite ends of oven (B) such as to permit operational arrangement of the embossing unit (G) upstream and of the drying unit (D) downstream.

3. Apparatus according to claim 2, in which the stabilization oven (B) is provided with a longitudinal treatment chamber (10), suitably insulated from the exterior, which has at its ends at least three rollers (11, 111, 211) arranged transversely, one of which (111) is positioned at the end with the doors (3, 4) for entry and exit of the strips, in a space between said doors, whereas the other two rollers (11, 211) are positioned at the other end of said treatment chamber (10), so that in said chamber the said strips have to travel a total path of about 10-11 meters long, said rollers (11, 111, 211) being suitably motorized so as to provide feed of the strips and to allow them the necessary freedom of retraction following the heat treatment that they undergo in the oven in question.

4. Apparatus according to claim 3, **characterized in that** an opening (12) is provided in the initial, top part of treatment chamber (10) of stabilization oven (B) and is abutted to the suction point of a fan (13) for example of the centrifugal type, with suitable characteristics, driven by an electric motor (113) located outside of the insulated structure of the oven, the delivery of said fan being abutted to a circulating duct or channel (14) provided in the upper portion of the oven, suitably insulated from the exterior, which runs along the entire length of the oven and, in the end portion, passes through a heat source (15) preferably of the type with electronic control, downstream from which at least one heat sensor (115) is provided and is connected to known means for regulating and controlling the operation of said source (15), so as to maintain the temperature value in treatment chamber (10) necessary for the process for stabilization of the strips (N), it being arranged that where it leaves the heating source (15), said channel (14) continues with a descending portion (114), suitably insulated from the exterior and opening on the sinner, rear wall of treatment chamber (10) with three mouths, of which the middle one (16) discharges into the space between the nearby strip guiding rollers (11, 211), whereas the other two mouths (116, 216) discharge above the top roller (11) and below the bottom roller (211) respectively, so as to distribute the hot air uniformly in treatment chamber (10), so that the four paths that the strips follow as they travel between rollers (11, 111, 211) are affected uniformly.

5. Apparatus according to claim 4, in which the heating source (15) is formed for example from batteries of shielded electric resistances, with identical characteristics, for example U-shaped, with external fins, and positioned transversely and with the correct inclination in said circulating channel (14).

6. Apparatus according to claim 4, **characterized in that**, for more uniform temperature distribution inside oven (B), at the end of the treatment chamber (10) of said oven (B) which is provided with the entrance door (3) and exit door (4) for the strips (N), a circulating opening can be provided opposite the upper opening (12), also on the lower portion of said treatment chamber (10), connected to a corresponding fan identical to the upper fan (13) and which can convey the air in the upper circulating channel (14) or in its own lower channel, with a corresponding heat source identical to the upper source (15) and which discharges at the bottom end of the vertical duct (114) with the blowing nozzles (16, 116, 216).

7. Apparatus according to the preceding claims, in which the stabilization oven (B) is provided, on at least one side, with a hinged flap (17) for example with bottom hinges (18) and is provided on the other side or distributed over the entire periphery, with suitable sealed closing means (19), the whole in such a way that when said flap is opened it would be possible to have access to the internal parts of the oven, for all the operations of starting, stopping and maintenance.

8. Apparatus according to claim 1, in which on leaving the discharge door (4) of the stabilization oven (B), the strips (N) travel over a roller (5), idling or motorized with torque-control means, and from said roller the strips follow a descending path and are passed in zigzag fashion, on four rollers (6, 106, 206, 306) positioned at the ends of the cooling tank (7) arranged beneath and along the oven (B) and on leaving the last one of the rollers (306) of said tank, the strips (N) enter the drying device (D) where they are dried at least in the first ascending path by suitable drying means (8), so that the water residues flow by gravity into tank (7) underneath, and at the exit from said drying means the strips are fed in a descending path by means of idling rollers (9, 109) and from the last one of these rollers the said strips go to the first roller of the downstream pulling group (A').

## Patentansprüche

1. Vorrichtung, insbesondere zur Stabilisierungsbehandlung von Kunststoffstreifen, zum Beispiel aus Polypropylen und/oder Polyethylen, für die Herstellung von Bändern oder andere Arten von Streifen der Art, die hintereinander umfasst: erste Mittel (A) zum Ziehen der Streifen, die behandelt werden sollen; eine Einheit (G) zum Prägen der Streifen; einen Wärmebehandlungsofen (B), um das Verfahren zur Stabilisierung der Streifen bereitzustellen; einen Behälter mit Kühlflüssigkeit, den die Streifen durchlaufen, nachdem sie den Stabilisierungsofen verlassen haben; Mittel (D) zum Trocknen der Streifen, nachdem sie den Behälter verlassen haben; und zweite Mittel (A') zum Ziehen der getrockneten Streifen, die mit einer Geschwindigkeit laufen, die geeignet niedriger als die der laufaufwärtigen Zugmittel (A) ist, in der Längsrichtung;
**dadurch gekennzeichnet, dass** der Stabilisierungsofen (B) an ein und demselben Ende mit einer oberen Klappe (3) für den Eintritt der Streifen und einer unteren Klappe (4) für den Austritt der Streifen versehen ist und an diesem selben Ende der Ofen mit Mitteln (5) für den anschließenden Abwärtsvorschub der Streifen versehen ist, so dass sie an einem Ende, das sich nach oben öffnet, in den Kühlbehälter (7) eintreten können, der unterhalb des Ofens und entlang diesem positioniert ist, und dass eine Öffnung an dem anderen Ende bereitgestellt ist, damit die gekühlten Streifen austreten können, woraufhin sie aufsteigen und in die Trocknungsmittel (D) eintreten und dann die laufabwärtigen Zugmittel (A') erreichen, wobei das Gesamte eingerichtet ist, um die Gesamtlänge der fraglichen Vorrichtung zu begrenzen.

2. Vorrichtung nach Anspruch 1, **dadurch gekennzeichnet, dass** sie eine Gesamtlänge von etwa 5800 - 6000 mm hat, die mit der Verwendung eines Stabilisierungsofens (B) mit der Länge von etwa 3000 mm und dem Ziehen von Gruppen (A, A') mit begrenzten Gesamtabmessungen und mit einer großen linearen Kontaktoberfläche mit den Streifen, von denen jede zum Beispiel etwa 650 mm lang ist, in einem Abstand von den entgegengesetzten Enden des Ofens (B) in Einklang steht, um die betriebsfähige Anordnung der Prägeeinheit (G) laufaufwärtig und der Trocknungseinheit (D) laufabwärtig zuzulassen.

3. Vorrichtung nach Anspruch 2, wobei der Stabilisierungsofen (B) in der Längsrichtung mit einer Behandlungskammer (10) versehen ist, die geeignet gegen das Äußere isoliert ist, die an ihren Enden wenigstens drei quer angeordnete Walzen (11, 111, 211) hat, von denen eine (111) an dem Ende mit den Klappen (3, 4) für den Eintritt und Austritt der Streifen in einem Raum zwischen den Klappen positioniert ist, während die anderen zwei Walzen (11, 211) an dem anderen Ende der Behandlungskammer (10) positioniert sind, so dass die Streifen in der Kammer einen Gesamtweg von etwa 10 bis 11 Meter Länge laufen müssen, wobei die Walzen (11, 111, 211) geeignet motorisiert sind, um den Vorschub der Streifen zu liefern und ihnen anschließend an die Wärmebehandlung, die sie in dem fraglichen Ofen erfahren, die nötige Rückzugsfreiheit zu lassen.

4. Vorrichtung nach Anspruch 3, **dadurch gekennzeichnet, dass** eine Öffnung (12) in dem anfänglichen oberen Teil der Behandlungskammer (10) des Stabilisierungsofens (B) bereitgestellt ist und an dem Ansaugpunkt eines Ventilators (13) zum Beispiel vom Zentrifugaltyp mit geeigneten Charakteristiken anliegt, der von einem Elektromotor (113) angetrieben wird, der außerhalb der isolierten Struktur des Ofens angeordnet ist, wobei die Abgabe des Ventilators an einem Zirkulationsdurchgang oder -kanal (14) anliegt, der in dem oberen Abschnitt des Ofens bereitgestellt ist, der geeignet gegen das Äußere isoliert ist, der entlang der gesamten Länge des Ofens verläuft und in dem Endabschnitt durch eine Wärmequelle (15) vorzugsweise mit einer elektronischen Steuerung geht, laufabwärtig von welcher wenigstens ein Wärmesensor (115) bereitgestellt ist und mit bekannten Mitteln zum Regulieren und Steuern des Betriebs der Quelle (15) verbunden ist, um den Temperaturwert in der Behandlungskammer (10) aufrecht zu halten, der für das Stabilisierungsverfahren der Streifen (N) notwendig ist, wobei sie derart eingerichtet ist, dass der Kanal (14), wo er die Wärmequelle (15) verlässt, mit einem Abwärtsabschnitt (114) fortgesetzt wird, der geeignet gegen das Äußere isoliert ist und sich auf der inneren Rückwand der Behandlungskammer (10) mit drei Mündungen öffnet, von denen die Mittlere (16) in den Raum zwischen den nahe gelegenen Streifenführungswalzen (11, 211) mündet, während die anderen zwei Mündungen (116, 216) jeweils oberhalb der oberen Walze (11) und unterhalb der unteren Walze (211) münden, um die heiße Luft gleichmäßig in der Behandlungskammer (10) zu verteilen, so dass die vier Wege, denen die Streifen folgen, während sie zwischen den Walzen (11, 111, 211) laufen, gleichmäßig beeinflusst werden.

5. Vorrichtung nach Anspruch 4, wobei die Wärmequelle (15) zum Beispiel aus Batterien mit abgeschirmten elektrischen Widerständen mit identischen Charakteristiken, zum Beispiel mit U-Form mit äußeren Lamellen, die quer und mit der richtigen Neigung in dem Zirkulationskanal (14) positioniert sind, ausgebildet ist.

6. Vorrichtung nach Anspruch 4, **dadurch gekennzeichnet, dass** an dem Ende der Behandlungskammer (10) des Ofens (B), der mit einer Eintrittsklappe (3) und einer Austrittsklappe (4) für die Streifen (N) versehen ist, für die gleichmäßigere Temperaturverteilung im Inneren des Ofens (B) eine Zirkulationsöffnung entgegengesetzt zu der oberen Öffnung (12) ebenfalls auf dem unteren Abschnitt der Behandlungskammer (10) bereitgestellt werden kann, welche mit einem entsprechenden zu dem oberen Ventilator (13) identischen Ventilator verbunden ist, der die Luft in dem oberen Zirkulationskanal (14) oder in seinem eigenen unteren Kanal mit einer entsprechende Wärmequelle, die zu der oberen Quelle (15) identisch ist, befördern kann und der an dem unteren Ende des vertikalen Durchgangs (114) mit den Blasdüsen (16, 116, 216) mündet.

7. Vorrichtung nach den vorhergehenden Ansprüchen, wobei der Stabilisierungsofen (B) auf wenigstens einer Seite mit einer schwenkbaren Klappe (17) zum Beispiel mit unteren Gelenken (18) versehen ist und auf der anderen Seite oder ober den gesamten Umfang verteilt mit geeigneten abgedichteten Verschlussmitteln (19) versehen ist, wobei das Ganze auf eine derartige Weise erfolgt, dass es möglich wäre, für alle Arbeitsgänge des Startens, Stoppens und der Wartung Zugang zu den inneren Teilen des Ofens zu haben, wenn die Klappe geöffnet wird.

8. Vorrichtung nach Anspruch 1, wobei die Streifen (N) beim Verlassen der Abgabeklappe (4) des Stabilisierungsofens (B) über eine Walze (5) laufen, die leerläuft oder mit Drehmomentsteuermitteln motorisiert ist, und wobei die Streifen von der Walze einem Abwärtsweg folgen und in einer Zickzack-Weise vier Walzen (6, 106, 206, 306) passieren, die an den Enden des Kühlbehälters (7) positioniert sind, der unterhalb und entlang des Ofens (B) angeordnet ist, und wobei die Streifen (N) beim Verlassen der letzten der Walzen (306) des Behälters in die Trocknungsvorrichtung (D) eintreten, wo sie wenigstens in dem ersten Aufwärtsweg durch geeignete Trocknungsmittel (8) getrocknet werden, so dass die Wasserreste durch die Schwerkraft in den Behälter (7) darunter fließen, und wobei die Streifen an dem Ausgang aus den Trocknungsmitteln mit Hilfe von Leerlaufwalzen (9, 109) in einen Abwärtsweg eingespeist werden und die Streifen von der letzten dieser Walzen zu der ersten Walze der laufabwärtigen Zuggruppe (A') gehen.

## Revendications

1. Appareil, en particulier pour le traitement de stabilisation des bandes de plastique, par exemple de polypropylène et/ou de polyéthylène, pour la production de feuillards ou d'autres types de bandes, du type comprenant en série : des premiers moyens (A) pour tirer les bandes à traiter ; une unité (G) pour gaufrer les bandes ; un four de traitement thermique (B) pour fournir le processus pour la stabilisation des bandes ; un réservoir avec du liquide de refroidissement dans lequel les bandes passent après avoir quitté le four de stabilisation ; des moyens (D) pour sécher les bandes après qu'elles ont quitté ledit réservoir ; et des seconds moyens (A') pour la traction longitudinale des bandes séchées qui se déplacent à une vitesse qui est convenablement inférieure à celle des moyens de traction en amont (A) ;
**caractérisé en ce que** le four de stabilisation (B) est prévu au niveau d'une seule et même extrémité avec une porte supérieure (3), pour que les bandes entrent et une porte inférieure (4) pour que lesdites bandes sortent, et au niveau de cette même extrémité, ledit four est doté de moyens (5) pour l'alimentation descendante successive des bandes de sorte qu'elles peuvent entrer au niveau d'une extrémité s'ouvrant vers le haut, dans le réservoir de refroidissement (7) qui est positionné au-dessous du four, et le long de ce dernier, et **en ce qu'**une ouverture est prévue au niveau de l'autre extrémité pour que les bandes refroidies sortent, après quoi, elles montent et pénètrent dans les moyens de séchage (D), et ensuite atteignent les moyens de traction en aval (A'), le tout étant agencé pour limiter la longueur globale de l'appareil en question.

2. Appareil selon la revendication 1, **caractérisé en ce qu'**il a une longueur totale d'environ 5800-6000 mm, compatible avec l'utilisation d'un four de stabilisation (B) avec une longueur d'environ 3000 mm et des groupes de traction (A, A') avec des dimensions globales limitées et avec une grande surface linéaire de contact avec les bandes, par exemple chacune d'environ 650 mm de long, à une distance des extrémités opposées du four (B) afin de permettre l'agencement opérationnel de l'unité de gaufrage (G) en amont et de l'unité de séchage (D) en aval.

3. Appareil selon la revendication 2, dans lequel le four de stabilisation (B) est prévu avec une chambre de traitement longitudinale (10) isolée de manière appropriée de l'extérieur, qui a au niveau de ses extrémités, au moins trois rouleaux (11, 111, 211) agencés de manière transversale, dont l'un (111) est positionné à l'extrémité avec les portes (3, 4) pour l'entrée et la sortie des bandes, dans un espace compris entre lesdites portes, alors que les deux autres rouleaux (11, 211) sont positionnés au niveau de l'autre extrémité de ladite chambre de traitement (10), de sorte que dans ladite chambre, lesdites bandes doivent parcourir une trajectoire totale d'environ 10-11 mètres de long, lesdits rouleaux (11, 111, 211) étant convenablement motorisés afin de fournir l'alimentation des bandes et leur permettre la liberté nécessaire de rétraction suite au traitement thermique qu'elles subissent dans le four en question.

4. Appareil selon la revendication 3, **caractérisé en ce qu'**une ouverture (12) est prévue dans la partie supérieure initiale de la chambre de traitement (10) du four de stabilisation (B), et vient en butée contre le point d'aspiration d'un ventilateur (13), par exemple de type centrifuge, avec des caractéristiques appropriées, entraîné par un moteur électrique (113) positionné à l'extérieur de la structure isolée du four, la distribution dudit ventilateur venant en butée contre un conduit ou canal de circulation (14) prévu dans la partie supérieure du four, convenablement isolée de l'extérieur, qui s'étend le long de toute la longueur du four et, dans la partie d'extrémité, passe par une source de chaleur (15) de préférence du type avec une commande électronique, en aval de laquelle est prévu au moins un capteur thermique (115) et est raccordé à des moyens connus pour réguler et commander le fonctionnement de ladite source (15), afin de maintenir la valeur de température dans la chambre de traitement (10) nécessaire pour le processus de stabilisation des bandes (N), étant prévu qu'à la sortie de la source de chaleur (15), ledit canal (14) continue avec une partie descendante (114) convenablement isolée de l'extérieur et s'ouvrant sur la paroi arrière interne de la chambre de traitement (10) avec trois bouches, dont la bouche centrale (16) se décharge dans l'espace entre les rouleaux voisins de guidage de bande (11, 211), alors que les deux autres bouches (116, 216) se déchargent au-dessus du rouleau supérieur (11) et au-dessous du rouleau inférieur (211) respectivement, afin de distribuer l'air chaud uniformément dans la chambre de traitement (10), de sorte que les quatre trajectoires que les bandes suivent lorsqu'elles se déplacent entre les rouleaux (11, 111, 211), sont affectées uniformément.

5. Appareil selon la revendication 4, dans lequel la source de chaleur (15) est formée par exemple à partir de batteries de résistances électriques blindées, avec des caractéristiques identiques, par exemple en forme de U, avec des ailettes externes, et positionnées de manière transversale et avec la bonne inclinaison dans ledit canal de circulation (14).

6. Appareil selon la revendication 4, **caractérisé en ce que**, pour une distribution de température plus uniforme à l'intérieur du four (B), à l'extrémité de la chambre de traitement (10) dudit four (B) qui est prévue avec la porte d'entrée (3) et la porte de sortie (4) pour les bandes (N), on peut prévoir une ouverture de circulation opposée à l'ouverture supérieure (12), également sur la partie inférieure de ladite chambre de traitement (10), raccordée à un ventilateur correspondant identique au ventilateur supérieur (13) et qui peut transporter l'air dans le canal de circulation supérieur (14) ou dans son propre canal inférieur, avec une source de chaleur correspondante identique à la source supérieure (15) et qui se décharge au niveau de l'extrémité inférieure du conduit vertical (114) avec les buses de soufflage (16, 116, 216).

7. Appareil selon les revendications précédentes, dans lequel le four de stabilisation (B) est doté, au moins d'un côté, d'un volet articulé (17) par exemple avec des charnières inférieures (18) et est doté de l'autre côté ou avec distribution sur toute la périphérie, de moyens de fermeture étanches (19) appropriés, le tout de sorte que lorsque ledit volet est ouvert, il est possible d'avoir accès aux parties internes du four, pour toute les opérations de démarrage, d'arrêt et d'entretien.

8. Appareil selon la revendication 1, dans lequel lorsqu'elles sortent par la porte de décharge (4) du four de stabilisation (B), les bandes (N) se déplacent sur un rouleau (5), fou ou motorisé avec des moyens de commande de couple, et à partir dudit rouleau, les bandes suivent une trajectoire descendante et passent en zigzag sur quatre rouleaux (6, 106, 206, 306) positionnés aux extrémités du réservoir de refroidissement (7) agencé au-dessous et le long du four (B) et en quittant les derniers rouleaux (306) dudit réservoir, les bandes (N) pénètrent dans le dispositif de séchage (D) où elles sont séchées au moins dans la première trajectoire ascendante par des moyens de séchage (8) appropriés, de sorte que l'eau résiduelle s'écoule par gravité dans le réservoir (7) au-dessous, et à la sortie desdits moyens de séchage, les bandes sont amenées dans une trajectoire descendante au moyen de rouleaux fous (9, 109) et à partir du dernier de ces rouleaux, lesdites bandes vont vers le premier rouleau du groupe de traction en aval (A').
